# EUROPEAN PATENT SPECIFICATION

(11) **EP 4 407 163 B1**
(45) Date of publication and mention of the grant of the patent: **24.12.2025**
(21) Application number: 23211730.9
(22) Date of filing: 23.11.2023
(51) Int. Cl.: F02C 3/30

(54) **CONDENSATION CONTROL OF STEAM INJECTED TURBINE ENGINE**
KONDENSATIONSKONTROLLE FÜR EINEN TURBINENMOTOR MIT DAMPFEINSPRITZUNG
COMMANDE DE CONDENSATION DE MOTEUR À TURBINE À INJECTION DE VAPEUR

(30) Priority: 27.01.2023 US 202363441553 P; 05.06.2023 US 202318329071
(43) Date of publication of application: 31.07.2024
(73) Proprietor: RTX Corporation, Farmington, CT 06032 (US)
(72) Inventor: TERWILLIGER, Neil J., Cheshire, 06410 (US); EVANS, Simon W., Farmington, 06032 (US)
(74) Representative: Dehns

(56) References cited:
- EP-A1- 4 112 909
- WO-A1-2016/003925
- US-A- 4 864 810
- US-A1- 2004 177 618
- US-A1- 2020 386 188

## Description

### TECHNICAL FIELD

The present disclosure relates generally to a steam injected turbine engine and more particularly to an engine including a control system that adjusts engine operation to control condensation accumulation.

### BACKGROUND

Reduction and/or elimination of carbon emissions generated by aircraft operation is a stated goal of aircraft manufacturers and airline operators. Turbine engines compress incoming core airflow, mix the compressed airflow with fuel that is ignited in a combustor to generate a high energy exhaust gas flow. Some energy in the high energy exhaust flow is recovered as it is expanded through a turbine section. Steam injection can provide improved propulsive efficiencies. Steam injection improves mass flow through the turbine section and thereby improves engine efficiency. However, the introduction of steam into a core flow may cause condensation accumulation in core engine components. Uncontrolled accumulation of condensation can affect engine performance and component life.

Turbine engine manufacturers continue to seek further improvements to engine performance including improvements to reduce environmental impact while improving thermal and propulsive efficiencies.
WO 2016/003925 A1 discloses an erosion suppression system and method in an exhaust gas recirculation gas turbine system.
US 4 864 810 A discloses tractor steam piston balancing.
US 2004/177618 A1 discloses methods for operating gas turbine engines.

### SUMMARY

A turbine engine assembly as claimed in claim 1.

In an embodiment of the foregoing turbine engine assembly, the controller is programed to determine an engine operating condition that generates an accumulation of condensation above a predefined amount and operate the control device in a predefined manner to reduce or prevent the accumulation of condensation.

In a further embodiment of any of the foregoing turbine engine assemblies, the first electric machine and the second electric machine are electrically coupled to each other for transferring power between the first spool and the second spool.

In a further embodiment of any of the foregoing turbine engine assemblies, the controller is programmed to operate one of the first electric machine and the second electric machine as a generator to place a load on the corresponding one of the first spool and the second spool and operate the other of the first electric machine and the second electric machine as an electric motor to partially drive the other of the first spool and the second spool.

In a further embodiment of any of the foregoing turbine engine assemblies, the controller is programmed to balance power between the first spool and the second spool to maintain a turbine exit temperature within a predefined range that is determined to reduce or eliminate condensation accumulation.

In a further embodiment of any of the foregoing turbine engine assemblies, a water flow is heated by one of the first electric machine and the second electric machine is communicated to an evaporator where the steam flow is generated.

In a further embodiment of any of the foregoing turbine engine assemblies, the turbine engine assembly includes a steam turbine that is driven by a steam flow upstream of the combustor.

In a further embodiment of any of the foregoing turbine engine assemblies, the control device includes a variable nozzle that is upstream of the compressor section. The variable nozzle is operated to control inlet flow into the compressor section to maintain an engine operating parameter within a predefined range that is determined to limit condensation accumulation.

In a further embodiment of any of the foregoing turbine engine assemblies, the control device includes a variable nozzle within the turbine section to control exhaust gas flow between turbine sections to maintain an engine operating parameter within a predefined range that is determined to limit condensation accumulation.

A method of controlling condensation accumulation in a steam injected turbine engine as claimed in claim 9.

In an embodiment of the foregoing method, the first electric machine and the second electric machine are electrically coupled to each other and the method further includes transferring electric power between the first spool and the second spool by operating one of the first electric machine and the second electric machine as a generator to place a load on the corresponding one of the first spool and the second spool and operating the other of the first electric machine and the second electric machine as an electric motor to partially drive the other of the first spool and the second spool.

In a further embodiment of any of the foregoing methods, the control device includes a variable nozzle that is operated to control inlet flow into compressor section and the controller operates the variable nozzle to change the inlet flow based on the monitored engine operating condition to maintain an engine operating parameter within a predefined range determined to limit condensation accumulation.

In a further embodiment of any of the foregoing methods, the control device includes a variable nozzle within a turbine section to control exhaust gas flow into the turbine section and the controller operates the variable nozzle to maintain an engine operating parameter within a predefined range that is determined to limit condensation accumulation.

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example turbine engine and control system embodiment.
Figure 2 is a schematic view of another example turbine engine and control system embodiment.
Figure 3 is a schematic view of another example turbine engine and control system embodiment.
Figure 4 is a schematic view of an example control system embodiment for control condensation accumulation.

### DETAILED DESCRIPTION

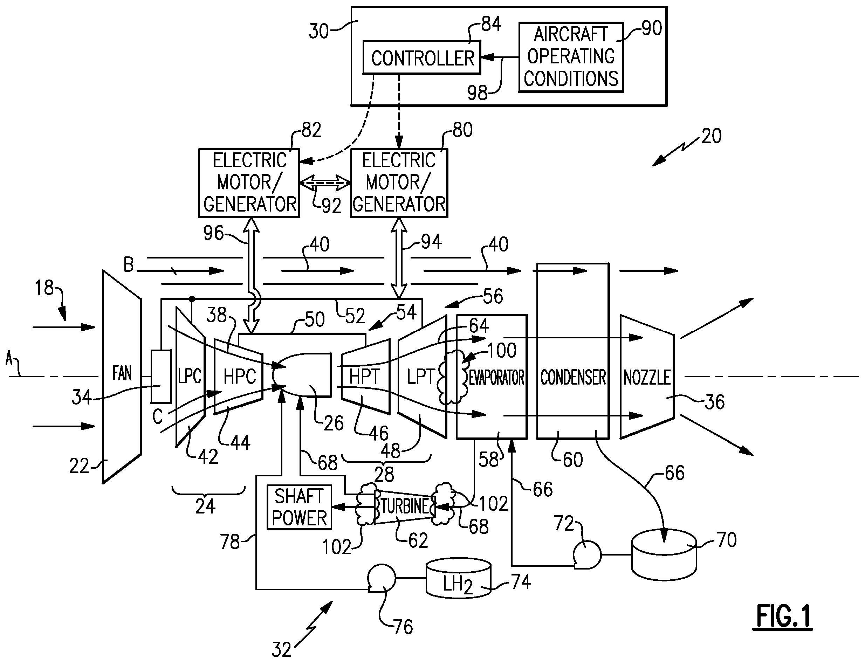

Figure 1 schematically illustrates an engine 20 wherein steam is injected into the core flow path to increase mass flow through a turbine section 28 and thereby provide increased power without additional work from a compressor section 24. Uncontrolled accumulation of condensation from water in the exhaust gas flow can reduce engine efficiency and decrease part durability. The example turbine engine 20 includes a control system 30 that adjusts a variable control device to tailor engine operation to reduce or prevent condensation accumulation.

The engine 20 includes a fan section 22, the compressor section 24, a combustor section 26 and the turbine section 28 disposed serially along an engine axis A. The fan section 22 drives inlet airflow 18 into a bypass flow path B and a core flow path C. In the compressor section 24, a core flow 38 is compressed and communicated to a combustor section 26. In the combustor section 26, the compressed core airflow is mixed with a fuel flow 78 and ignited to generate the high energy combusted exhaust gas flow 64 that expands through the turbine section 28 where energy is extracted and utilized to drive the fan section 22 and the compressor section 24 before being exhausted through nozzle 36.

The engine 20 includes a fuel system 32 that includes a fuel tank 74 and a fuel pump 76 for generating the fuel flow 78. The example fuel system 32 is configured to provide a hydrogen based fuel such as a liquid hydrogen (LH₂). Although hydrogen is disclosed by way of example, other non-carbon based fuels could be utilized and are within the contemplation of this disclosure. Moreover, the disclosed features may also be beneficial in an engine configured to operate with traditional carbon based fuels.

The example engine 20 includes the compressor section 24 with a low pressure compressor (LPC) 42 and a high pressure compressor (HPC) 44. The LPC 42 may also be referred to as a first compressor and the HPC 44 may be referred to as a second compressor. The turbine section 28 includes a low pressure turbine (LPT) 48 and a high pressure turbine (HPT) 46. The LPT 48 may also be referred to as a first turbine and the HPT 46 may also be referred to as a second turbine.

The LPC 42 is coupled to the LPT 48 though a first shaft 52 to define a low or first spool 56. The HPC 44 is couple to the HPT 46 through a second shaft 50 to define a high or second spool 54. It should be appreciated, that other turbine section configurations could be utilized and remain within the scope and contemplation of this disclosure.

An evaporator 58 is disposed along the engine axis A aft of the LPT 48. In the evaporator 58, heat from the exhaust gas flow 64 is utilized to transform a water flow 66 into a steam flow 68. The steam flow 68 is then communicated into the core flow 38. In one disclosed example embodiment, the steam flow 68 is injected into the combustor 26. However, the steam flow 68 may be injected within the core flow path C upstream of the combustor 26.

The water flow 66 is provided by a condenser 60 that draws water out of the exhaust gas flow 64. A cooling flow, such as a portion of the bypass air flow 40 cools the exhaust gas flow 64 in the condenser 60 to recovery water 66. The water is communicated to a storage tank 70. A pump 72 provides a pressurized water flow 66 to the evaporator for generation of steam 68. Although the bypass air flow 40 is shown by way of example as the cooling medium used to condense water from the exhaust gas flow 64, other cooling mediums, such as fuel, could be utilized and are within the contemplation of this disclosure.

The steam flow 68 increases mass flow through the turbine section 28 and thereby increases engine power and efficiency. The engine 20 has an increased power output from the injected steam 68 due to an increasing mass flow through the turbine section 28 without a corresponding increase in work from the compressor section 24. An example engine operation cycle may include up to (or more than) 35% steam-air-ratios (SAR) and may be assisted by a multiple fold (e.g., 2x, 3x, etc.) increase in moisture from burning H₂ as the fuel.

A steam turbine 62 may receive a portion of the steam flow 68 to capture additional waste energy and generate shaft power. The steam turbine 62 may be connected to drive any engine accessory component or gearbox.

The input of the steam flow 68 into the core flow along with the use of hydrogen based fuels can result in the accumulation of condensation throughout the engine 20. Condensation may build up anywhere within the core flow path C, including just aft of the turbine section as indicated at 100, and/or proximate the steam turbine 102. While some portions of the engine 20 may not be adversely affected by the buildup of condensation, other sections may encounter reduced component operational efficiency and durability. Accordingly, the example engine 20 includes the control system 30 for controlling the accumulation of condensation.

The engine 20 includes a first electric machine 80 electrically coupled to a second electric machine 82. Each of the first and second electric machines 82, 80 can operate as either an electric generator or an electric motor. The first electric machine 80 is coupled through a first mechanical link 94 to the first spool 56. In one example embodiment, the first link 94 is coupled to the first shaft 52. The second electric machine is coupled though a second mechanical link 96 to the second spool 54. In one example embodiment, the second link 96 is coupled to the second shaft 50 of the second spool 54. The first link 94 and the second link 96 may include any combination of gear, shaft and mechanical coupling to transfer torque and power between the corresponding shafts 50, 52 and machines 80, 82.

The first and second electric machines 80, 82 are actuated by a controller 84 to maintain engine operation within a predefined range determined to reduce and/or eliminate condensation build up. The controller 84, may, for example, operate the first and second electric machines to balance loads between the first and second spools 54, 56 to maintain a desired overall pressure ratio (OPR) that maintains reduces condensation generation to within acceptable limits.

The disclosed example controller 84 may include a device and system for performing necessary computing or calculation operations. The controller 84 may be specially constructed for this purpose, or it may comprise a portion of an engine or aircraft controller that includes operating instructions for directing operation of the engine control devices based on information indicative of the accumulation of condensation within the engine 20.

In one example embodiment, the controller 84 is programmed to determine an engine operating condition from various aircraft sensors, systems and controllers schematically indicated at 90 based on predefined and stored information. The controller 84 is further programmed to operate the electric machines 80, 82 to prevent the accumulation of condensation.

In one disclosed example embodiment, to controller 84 is programmed to operate first electric machine 80 as a generator to place a load on the he first spool 56. The controller 84 operates the second electric machine 82 as an electric motor that receives electric power 92 from the first electric machine 80 to partially drive the second spool 54.

Alternatively, the controller 84 may operate the second electric machine 82 as a generator to place a load on the second spool 54 and operate the first electric machine 80 as an electric motor to partially drive the first spool 56. In each example operation conditions, the controller 84 is programmed to balance power between the first spool 54 and the second spool 56 to maintain engine operation within predefined operating parameters that prevent and/or eliminate condensation accumulation.

In one example embodiment, the controller 84 is programmed to maintain a turbine exit temperature within a predefined range that is determined to reduce or eliminate condensation accumulation. In another example embodiment, the OPR is utilized as an indicator of condensation accumulation and maintained within a predefined range. Moreover, although individual engine operating parameters are disclosed and discussed by way of example, many different individual and combination of factors and engine operating parameters that are indicative of possible condensation accumulation could be utilized and are within the contemplation of this disclosure.

Moreover, although the locations of possible condensation accumulation are shown at 100 and 102 by way of example, other location within the engine may also warrant efforts to avoid and/or prevent condensation accumulation.

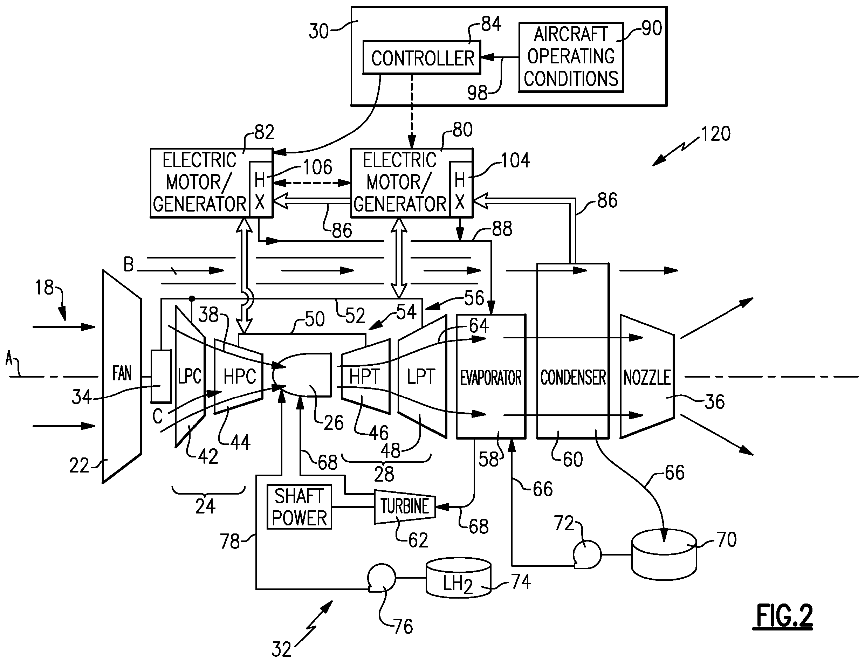

Referring to Figure 2, another example engine embodiment is generally indicated at 120 and includes features for recovering thermal energy in the form of waste heat generated by the first and second electric machines 80, 82. In this example embodiment, a water flow 86 is communicated to one of a first heat exchanger 104 and a second heat exchanger 106 associated with a corresponding one of the first and second electric machines 80, 82. The cooling water flow 86 is heated by thermal energy generated at the corresponding electric machine 80, 82. The heated water flow 88 is than communicated to the evaporator 58 for transformation into the steam flow 68. As appreciated, the cooling water flow 86 and the heated water flow 88 may be selectively communicated to both or individually to each of the first and second electric machines 80, 82. Thermal energy recovered from operation of the electric machines 80, 82 is input back into the engine 120 in the form of the steam flow 68 injected into the combustor 26. Additionally, thermal energy may be recovered in the form of shaft power generated by the steam turbine 62.

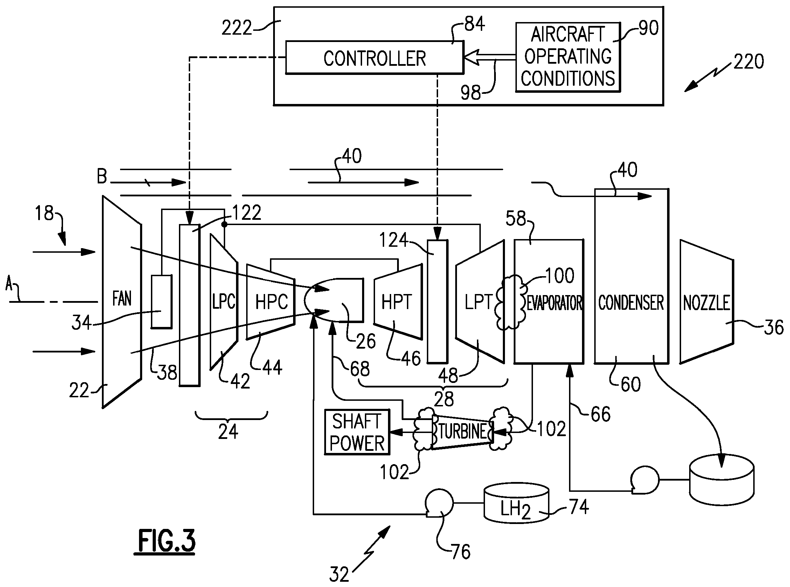

Referring to Figure 3, another example engine embodiment is schematically shown and indicated at 220. The engine 220 includes variable features that tailor engine operation based on information indictive of condensation accumulation outside predefined ranges. The engine 220 includes a first variable nozzle 122 that adjusts inlet flow 18 into the compressor section 24 and thereby into the core flow path C. Adjustment of inlet airflow 18 into the core flow path C can be utilized to control an OPR, exit temperatures for the compressor section 24, exit temperature of the turbine section 28 as well as other engine operating parameters that effect condensation accumulation. The first variable nozzle 122 may be of any structure or configuration that provides control over inlet flow into the core flow path C. The variable nozzle 122, may only partially close off inlet flows 18 to provide small changes that control condensation accumulation.

A second variable flow control nozzle 124 is shown within the turbine section 28. In this example, the second flow control nozzle 124 provides control of flows through the turbine sections 46, 48. The control nozzle 124 may only partially restrict exhaust flows through the turbine section an amount that provides sufficient changes to control and/or prevent condensation accumulation.

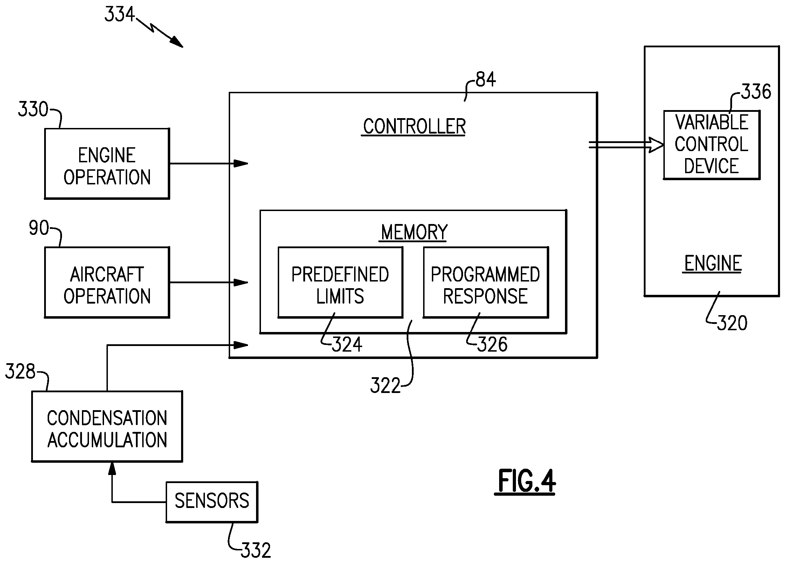

Referring to Figure 4, an example variable control system is schematically shown and indicated at 334. The example control system 334 includes the controller 84 that is in control communication with a variable control device 336 of a turbine engine that is schematically indicated at 320. The controller 84 includes a memory device 322 with information indicative of predefined engine operating limits, schematically shown at 324, corresponding to condensation accumulation. The memory device 322 further includes information regarding a predefined programed response, schematically shown at 326. The controller 84 receives information indicative of engine operation 330, aircraft operation 90 and condensation accumulation 328. Information on condensation accumulation 328 may be ascertained from other engine operating parameters that are indictive of condensation accumulation or direct information from sensors 332 that collect information on condensation accumulation. The sensors 332 may directly detect condensation accumulation or information that would indicate the accumulation of condensation based on other information and measurements.

The controller 84 uses the information regarding engine operation 330, aircraft operation 90 and condensation information 328 to control a variable control device schematically shown at 336. The variable control device 336 may be an engine operating control such as fuel valve to control a fuel flow to the combustor, a variable area nozzle controlling inlet airflow, a variable turbine, a variable outlet nozzle or any other variable control components. Moreover, the variable control device 336 may be associated with the water recovery and steam generation such as valving to limit water recovery and/or steam generation in response to information that is indicative of condensation accumulation.

Accordingly, the example disclosed engine and control system embodiments provide controls to reduce or prevent the accumulation of condensation during engine operation.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A turbine engine assembly (20; 120; 220) comprising:
a compressor section (24) where a core flow (38) in a core flow path (C) is compressed;
a combustor section (26) where the compressed core flow (38) is mixed with fuel and ignited to generate an exhaust gas flow (64) in the core flow path (C);
a turbine section (28) through which the exhaust gas flow (64) expands to generate power utilized to drive the compressor section (24);
a steam injection system where water (66) is transformed into a steam flow (68) and communicated into the core flow (38); and
a control system (30; 334) for adjusting engine operation (330) to control accumulation of condensation, the control system (30; 334) including a controller (84) programmed to operate a control device (80, 82; 122, 124; 336) in a variable manner to reduce or prevent condensation accumulation in the core flow path (C),
wherein the compressor section (24) includes a first compressor (42) and the turbine section (28) includes a first turbine (48) coupled to the first compressor (42) to define a first spool (56),
**characterised in that**:
the compressor section (24) includes a second compressor (44) and the turbine section (28) includes a second turbine (46) coupled to the second compressor (44) to define a second spool (54),
the control device (80...336) comprises a first electric machine (80) selectively connectable to the first spool (56) and a second electric machine (82) selectively connectable to the second spool (54) and the controller (84) is programmed to operate the first electric machine (80) and the second electric machine (82) to maintain engine operation within a predefined range determined to reduce or stop
the condensation accumulation in the core flow path, and
wherein a water flow (86) is in thermal communication with at least one of the first electric machine (80) and the second electric machine (82) for accepting thermal energy generated by at least one of the first electric machine (80) and the second electric machine (82).

2. The turbine engine assembly (20; 120; 220) as recited in claim 1, wherein the first electric machine (80) and the second electric machine (82) are electrically coupled to each other for transferring power between the first spool (56) and the second spool (54).

3. The turbine engine assembly (20; 120; 220) as recited in claim 2, wherein the controller (84) is programmed to operate one of the first electric machine (80) and the second electric machine (82) as a generator to place a load on the corresponding one of the first spool (56) and the second spool (54) and operate the other of the first electric machine (80) and the second electric machine (82) as an electric motor to partially drive the other of the first spool (56) and the second spool (54).

4. The turbine engine assembly (20; 120; 220) as recited in claim 2 or 3, wherein the controller (84) is programmed to balance power between the first spool (56) and the second spool (54) to maintain a turbine exit temperature within a predefined range that is determined to reduce or eliminate condensation accumulation.

5. The turbine engine assembly (120) as recited in claim 2, 3 or 4, wherein a water flow (88) heated by one of the first electric machine (80) and the second electric machine (82) is communicated to an evaporator (58) where the steam flow (68) is generated.

6. The turbine engine assembly (20; 120; 220) as recited in any preceding claim, including a steam turbine (62) driven by a steam flow (68) upstream of the combustor (26).

7. The turbine engine assembly (220) as recited in any preceding claim, wherein the control device (80...336) comprises a variable nozzle (122) upstream of the compressor section (24), the variable nozzle (122) operated to control inlet flow (18) into the compressor section (24) to maintain an engine operating parameter within a predefined range determined to limit condensation accumulation, and/or wherein the control device (80...336) comprises a variable nozzle (124) within the turbine section (28) to control exhaust gas flow (64) between turbines (46, 48) to maintain an engine operating parameter within a predefined range determined to limit condensation accumulation.

8. The turbine engine assembly (20; 120; 220) of any preceding claim, further comprising a cryogenic fuel system (32) for supplying a cryogenic fuel to the combustor (26) through a fuel flow path, and a water recovery system where water (66) from the exhaust gas flow (64) is recovered.

9. A method of controlling condensation accumulation in the turbine engine assembly (20; 120; 220) of claim 1, the method comprising:
monitoring an engine operating condition indicative of an accumulation of condensation; and
adjusting the variable control device (80, 82; 122, 124; 336) utilizing the controller (84) based on the monitored engine operating condition to reduce or prevent the accumulation of condensation in the core flow path (C).

10. The method as recited in claim 9, wherein the first electric machine (80) and the second electric machine (82) are electrically coupled to each other and the method further comprises transferring electric power between the first spool (56) and the second spool (54) by operating one of the first electric machine (80) and the second electric machine (82) as a generator to place a load on the corresponding one of the first spool (56) and the second spool (54) and operating the other of the first electric machine (80) and the second electric machine (82) as an electric motor to partially drive the other of the first spool (56) and the second spool (54).

11. The method as recited in claim 9 or 10, wherein the variable control device (80...336) comprises a variable nozzle (122) operated to control inlet flow (18) into compressor section (24) and the controller (84) operates the variable nozzle (122) to change the inlet flow (18) based on the monitored engine operating condition to maintain an engine operating parameter within a predefined range determined to limit condensation accumulation.

12. The method as recited in claim 9, 10 or 11, wherein the variable control device (80...336) comprises a variable nozzle (124) within a turbine section (28) to control exhaust gas flow (64) into the turbine section (28) and the controller (84) operates the variable nozzle (124) to maintain an engine operating parameter within a predefined range determined to limit condensation accumulation.

## Patentansprüche

1. Turbinenmotorbaugruppe (20; 120; 220), umfassend:
einen Verdichterabschnitt (24), in dem ein Kernstrom (38) in einem Kernstromweg (C) verdichtet wird;
einen Brennkammerabschnitt (26), in dem der komprimierte Kernstrom (38) mit Brennstoff vermischt und gezündet wird, um einen Abgasstrom (64) im Kernstromweg (C) zu erzeugen;
einen Turbinenabschnitt (28), durch den sich der Abgasstrom (64) ausdehnt, um Leistung zu erzeugen, die zum Antreiben des Verdichterabschnitts (24) genutzt wird;
ein Dampfeinspritzsystem, in dem Wasser (66) in einen Dampfstrom (68) umgewandelt und in den Kernstrom (38) geleitet wird; und ein Kontrollsystem (30; 334) zum Einstellen des Motorbetriebs (330), um die Ansammlung von Kondensation zu kontrollieren, wobei das Kontrollsystem (30; 334) einen Controller (84) beinhaltet, der dazu programmiert ist, eine Kontrollvorrichtung (80, 82; 122, 124; 336) variabel zu betreiben, um die Kondensationsansammlung im Kernstromweg (C) zu verringern oder zu verhindern,
wobei der Verdichterabschnitt (24) einen ersten Verdichter (42) beinhaltet und der Turbinenabschnitt (28) eine erste Turbine (48) beinhaltet, die mit dem ersten Verdichter (42) gekoppelt ist, um eine erste Läufergruppe (56) zu definieren,
**dadurch gekennzeichnet, dass**:
der Verdichterabschnitt (24) einen zweiten Verdichter (44) beinhaltet und der Turbinenabschnitt (28) eine zweite Turbine (46) beinhaltet, die mit dem zweiten Verdichter (44) gekoppelt ist, um eine zweite Läufergruppe (54) zu definieren,
die Kontrollvorrichtung (80...336) eine erste elektrische Maschine (80), die wahlweise mit der ersten Läufergruppe (56) verbindbar ist, und eine zweite elektrische Maschine (82), die wahlweise mit der zweiten Läufergruppe (54) verbindbar ist, umfasst und der Controller (84) dazu programmiert ist, die erste elektrische Maschine (80) und die zweite elektrische Maschine (82) zu betreiben, um den Motorbetrieb innerhalb eines vordefinierten Bereichs zu halten, der so bestimmt ist, dass die Kondensationsansammlung im Kernstromweg reduziert oder gestoppt wird, und
wobei ein Wasserstrom (86) in thermischer Verbindung mit mindestens einer der ersten elektrischen Maschine (80) und der zweiten elektrischen Maschine (82) steht, um thermische Energie aufzunehmen, die von mindestens einer der ersten elektrischen Maschine (80) und der zweiten elektrischen Maschine (82) erzeugt wird.

2. Turbinenmotorbaugruppe (20; 120; 220) nach Anspruch 1, wobei die erste elektrische Maschine (80) und die zweite elektrische Maschine (82) elektrisch miteinander gekoppelt sind, um Leistung zwischen der ersten Läufergruppe (56) und der zweiten Läufergruppe (54) zu übertragen.

3. Turbinenmotorbaugruppe (20; 120; 220) nach Anspruch 2, wobei der Controller (84) dazu programmiert ist, eine der ersten elektrischen Maschine (80) und der zweiten elektrischen Maschine (82) als Generator zu betreiben, um eine Last auf die entsprechende eine der ersten Läufergruppe (56) und der zweiten Läufergruppe (54) zu legen, und die andere der ersten elektrischen Maschine (80) und der zweiten elektrischen Maschine (82) als Elektromotor zu betreiben, um die andere der ersten Läufergruppe (56) und der zweiten Läufergruppe (54) teilweise anzutreiben.

4. Turbinenmotorbaugruppe (20; 120; 220) nach Anspruch 2 oder 3, wobei der Controller (84) dazu programmiert ist, die Leistung zwischen der ersten Läufergruppe (56) und der zweiten Läufergruppe (54) auszugleichen, um eine Turbinenaustrittstemperatur innerhalb eines vordefinierten Bereichs zu halten, der so bestimmt ist, dass eine Kondensationsansammlung verringert oder beseitigt wird.

5. Turbinenmotorbaugruppe (120) nach Anspruch 2, 3 oder 4, wobei ein von einer der ersten elektrischen Maschine (80) und der zweiten elektrischen Maschine (82) erhitzter Wasserstrom (88) zu einem Verdampfer (58) geleitet wird, wo der Dampfstrom (68) erzeugt wird.

6. Turbinenmotorbaugruppe (20; 120; 220) nach einem der vorhergehenden Ansprüche, beinhaltend eine Dampfturbine (62), die durch einen Dampfstrom (68) stromaufwärts der Brennkammer (26) angetrieben wird.

7. Turbinenmotorbaugruppe (220) nach einem der vorhergehenden Ansprüche, wobei die Kontrollvorrichtung (80...336) eine variable Düse (122) stromaufwärts des Verdichterabschnitts (24) umfasst, wobei die variable Düse (122) betrieben wird, um den Einlassstrom (18) in den Verdichterabschnitt (24) zu kontrollieren, um einen Motorbetriebsparameter innerhalb eines vordefinierten Bereichs zu halten, der so bestimmt ist, dass die Kondensationsansammlung begrenzt wird, und/oder wobei die Kontrollvorrichtung (80...336) eine variable Düse (124) innerhalb des Turbinenabschnitts (28) umfasst, um den Abgasstrom (64) zwischen den Turbinen (46, 48) zu kontrollieren, um einen Motorbetriebsparameter innerhalb eines vordefinierten Bereichs zu halten, der so bestimmt ist, dass die Kondensationsansammlung begrenzt wird.

8. Turbinenmotorbaugruppe (20; 120; 220) nach einem der vorhergehenden Ansprüche, ferner umfassend ein kryogenes Brennstoffsystem (32) zum Zuführen eines kryogenen Brennstoffs zur Brennkammer (26) durch einen Brennstoffstromweg und ein Wasserrückgewinnungssystem, in dem Wasser (66) aus dem Abgasstrom (64) zurückgewonnen wird.

9. Verfahren zum Kontrollieren der Kondensationsansammlung in der Turbinenmotorbaugruppe (20; 120; 220) nach Anspruch 1, wobei das Verfahren Folgendes umfasst:
Überwachen eines Motorbetriebszustands, der eine Ansammlung von Kondensation angibt; und
Einstellen der variablen Kontrollvorrichtung (80, 82; 122, 124; 336) unter Nutzung des Controllers (84) basierend auf dem überwachten Motorbetriebszustand, um die Ansammlung von Kondensation im Kernstromweg (C) zu verringern oder zu verhindern.

10. Verfahren nach Anspruch 9, wobei die erste elektrische Maschine (80) und die zweite elektrische Maschine (82) elektrisch miteinander gekoppelt sind und das Verfahren ferner Übertragen von elektrischer Leistung zwischen der ersten Läufergruppe (56) und der zweiten Läufergruppe (54) umfasst, indem eine der ersten elektrischen Maschine (80) und der zweiten elektrischen Maschine (82) als Generator betrieben wird, um eine Last auf die entsprechende einer der ersten Läufergruppe (56) und der zweiten Läufergruppe (54) zu legen, und die andere der ersten elektrischen Maschine (80) und der zweiten elektrischen Maschine (82) als Elektromotor betrieben wird, um die andere der ersten Läufergruppe (56) und der zweiten Läufergruppe (54) teilweise anzutreiben.

11. Verfahren nach Anspruch 9 oder 10, wobei die variable Kontrollvorrichtung (80 ... 336) eine variable Düse (122) umfasst, die betrieben wird, um den Einlassstrom (18) in den Verdichterabschnitt (24) zu kontrollieren, und der Controller (84) die variable Düse (122) betreibt, um den Einlassstrom (18) basierend auf dem überwachten Motorbetriebszustand zu ändern, um einen Motorbetriebsparameter innerhalb eines vordefinierten Bereichs zu halten, der so bestimmt ist, dass die Kondensationsansammlung begrenzt wird.

12. Verfahren nach Anspruch 9, 10 oder 11, wobei die variable Kontrollvorrichtung (80 ... 336) eine variable Düse (124) innerhalb eines Turbinenabschnitts (28) umfasst, um den Abgasstrom (64) in den Turbinenabschnitt (28) zu kontrollieren, und wobei der Controller (84) die variable Düse (124) betreibt, um einen Motorbetriebsparameter innerhalb eines vordefinierten Bereichs zu halten, der so bestimmt ist, dass die Kondensationsansammlung begrenzt wird.

## Revendications

1. Ensemble moteur à turbine (20 ; 120 ; 220) comprenant :
une section de compresseur (24) où un écoulement central (38) dans un trajet d'écoulement central (C) est comprimé ;
une section de chambre de combustion (26) où l'écoulement central (38) comprimé est mélangé avec du combustible et allumé pour générer un écoulement de gaz d'échappement (64) dans le trajet d'écoulement central (C) ;
une section de turbine (28) à travers laquelle l'écoulement de gaz d'échappement (64) se dilate pour générer de la puissance utilisée pour entraîner la section de compresseur (24) ;
un système d'injection de vapeur où l'eau (66) est transformée en un écoulement de vapeur (68) et communiquée dans l'écoulement central (38) ; et
un système de commande (30 ; 334) pour ajuster le fonctionnement de moteur (330) afin de commander l'accumulation de condensation, le système de commande (30 ; 334) comprenant un contrôleur (84) programmé pour faire fonctionner un dispositif de commande (80, 82 ; 122, 124 ; 336) de manière variable pour réduire ou empêcher l'accumulation de condensation dans le trajet d'écoulement central (C),
dans lequel la section de compresseur (24) comporte un premier compresseur (42) et la section de turbine (28) comporte une première turbine (48) accouplée au premier compresseur (42) pour définir un premier corps (56),
**caractérisé en ce que** :
la section de compresseur (24) comporte un second compresseur (44) et la section de turbine (28) comporte une seconde turbine (46) accouplée au second compresseur (44) pour définir un second corps (54),
le dispositif de commande (80...336) comprend une première machine électrique (80) pouvant être raccordée sélectivement au premier corps (56) et une seconde machine électrique (82) pouvant être raccordée sélectivement au second corps (54) et le contrôleur (84) est programmé pour faire fonctionner la première machine électrique (80) et la seconde machine électrique (82) pour maintenir le fonctionnement de moteur au sein d'une plage prédéfinie, déterminée pour réduire ou arrêter l'accumulation de condensation dans le trajet d'écoulement central, et
dans lequel un écoulement d'eau (86) est en communication thermique avec au moins l'une de la première machine électrique (80) et de la seconde machine électrique (82) pour accepter l'énergie thermique générée par au moins l'une de la première machine électrique (80) et de la seconde machine électrique (82).

2. Ensemble moteur à turbine (20 ; 120 ; 220) selon la revendication 1, dans lequel la première machine électrique (80) et la seconde machine électrique (82) sont couplées électriquement l'une à l'autre pour transférer de la puissance entre le premier corps (56) et le second corps (54).

3. Ensemble moteur à turbine (20 ; 120 ; 220) selon la revendication 2, dans lequel le contrôleur (84) est programmé pour faire fonctionner l'une de la première machine électrique (80) et de la seconde machine électrique (82) comme un générateur afin de placer une charge sur le corps correspondant parmi le premier corps (56) et le second corps (54) et faire fonctionner l'autre de la première machine électrique (80) et de la seconde machine électrique (82) comme un moteur électrique pour entraîner partiellement l'autre du premier corps (56) et du second corps (54).

4. Ensemble moteur à turbine (20 ; 120 ; 220) selon la revendication 2 ou 3, dans lequel le contrôleur (84) est programmé pour équilibrer la puissance entre le premier corps (56) et le second corps (54) pour maintenir une température de sortie de turbine au sein d'une plage prédéfinie qui est déterminée pour réduire ou éliminer l'accumulation de condensation.

5. Ensemble moteur à turbine (120) selon la revendication 2, 3 ou 4, dans lequel un écoulement d'eau (88) chauffé par l'une de la première machine électrique (80) et de la seconde machine électrique (82) est communiqué à un évaporateur (58) où l'écoulement de vapeur (68) est généré.

6. Ensemble moteur à turbine (20 ; 120 ; 220) selon une quelconque revendication précédente, comportant une turbine à vapeur (62) entraînée par un écoulement de vapeur (68) en amont de la chambre de combustion (26).

7. Ensemble moteur à turbine (220) selon une quelconque revendication précédente, dans lequel le dispositif de commande (80...336) comprend une tuyère variable (122) en amont de la section de compresseur (24), la tuyère variable (122) étant mise en fonctionnement pour commander l'écoulement d'entrée (18) dans la section de compresseur (24) pour maintenir un paramètre de fonctionnement de moteur au sein d'une plage prédéfinie déterminée pour limiter l'accumulation de condensation, et/ou dans lequel le dispositif de commande (80...336) comprend une tuyère variable (124) au sein de la section de turbine (28) pour commander un écoulement de gaz d'échappement (64) entre les turbines (46, 48) pour maintenir un paramètre de fonctionnement de moteur au sein d'une plage prédéfinie déterminée pour limiter l'accumulation de condensation.

8. Ensemble moteur à turbine (20 ; 120 ; 220) selon une quelconque revendication précédente, comprenant également un système de combustible cryogénique (32) pour alimenter en combustible cryogénique la chambre de combustion (26) par l'intermédiaire d'un trajet d'écoulement de combustible, et un système de récupération d'eau où l'eau (66) provenant de l'écoulement de gaz d'échappement (64) est récupérée.

9. Procédé de commande d'accumulation de condensation dans l'ensemble moteur à turbine (20 ; 120 ; 220) selon la revendication 1, comprenant :
la surveillance d'un état de fonctionnement de moteur indiquant une accumulation de condensation ; et
l'ajustement du dispositif de commande variable (80, 82 ; 122, 124 ; 336) à l'aide du contrôleur (84) en fonction de l'état de fonctionnement de moteur surveillé pour réduire ou empêcher l'accumulation de condensation dans le trajet d'écoulement central (C).

10. Procédé selon la revendication 9, dans lequel la première machine électrique (80) et la seconde machine électrique (82) sont couplées électriquement l'une à l'autre et le procédé comprend également le transfert de puissance électrique entre le premier corps (56) et le second corps (54) en faisant fonctionner l'une de la première machine électrique (80) et de la seconde machine électrique (82) comme un générateur pour placer une charge sur le corps correspondant du premier corps (56) et du second corps (54) et en faisant fonctionner l'autre de la première machine électrique (80) et de la seconde machine électrique (82) comme un moteur électrique pour entraîner partiellement l'autre du premier corps (56) et du second corps (54).

11. Procédé selon la revendication 9 ou 10, dans lequel le dispositif de commande variable (80...336) comprend une tuyère variable (122) mise en fonctionnement pour commander l'écoulement d'entrée (18) dans la section de compresseur (24) et le contrôleur (84) fait fonctionner la tuyère variable (122) pour modifier l'écoulement d'entrée (18) sur la base de l'état de fonctionnement de moteur surveillé pour maintenir un paramètre de fonctionnement de moteur au sein d'une plage prédéfinie déterminée pour limiter l'accumulation de condensation.

12. Procédé selon la revendication 9, 10 ou 11, dans lequel le dispositif de commande variable (80...336) comprend une tuyère variable (124) au sein d'une section de turbine (28) pour commander l'écoulement de gaz d'échappement (64) dans la section de turbine (28) et le contrôleur (84) fait fonctionner la tuyère variable (124) pour maintenir un paramètre de fonctionnement de moteur au sein d'une plage prédéfinie déterminée pour limiter l'accumulation de condensation.
